# EUROPEAN PATENT SPECIFICATION

(11) **EP 3 513 933 B1**
(45) Date of publication and mention of the grant of the patent: **04.05.2022**
(21) Application number: 18212164.0
(22) Date of filing: 13.12.2018
(51) Int. Cl.: B27M 1/08, F16P 3/12, F16P 3/14, B23Q 11/00

(54) **MACHINE FOR WORKING WOODEN WORKPIECES AND THE LIKE, PROVIDED WITH A SECURITY SYSTEM FOR DETECTING THE PRESENCE OF AN OPERATOR AND OPERATION METHOD THEREOF**
HOLZBEARBEITUNGSMASCHINE UND DERGLEICHEN, AUSGESTATTET MIT EINEM SICHERHEITSSYSTEM ZUM ERKENNEN DER ANWESENHEIT EINES BEDIENERS UND VERFAHREN ZUM BETREIBEN DESSELBEN
DISPOSITIF D'USINAGE POUR DES PIÈCES EN BOIS ET SIMILAIRES, EQUIPEE D'UN SYSTEME DE SECURITE PERMETTANT DE DETECTER LA PRESENCE D'UN OPERATEUR ET SON PROCEDE DE FONCTIONNEMENT

(30) Priority: 17.01.2018 IT 201800001134
(43) Date of publication of application: 24.07.2019
(73) Proprietor: SCM Group S.p.A., 47921 Rimini (RN) (IT)
(72) Inventor: ANTONELLI, Marco, 47921 RIMINI (IT)
(74) Representative: Tiburzi, Andrea

(56) References cited:
- EP-A1- 2 253 417
- EP-A1- 2 628 993
- EP-A2- 1 918 629
- DE-A1-102015 226 299
- US-A- 5 047 752

## Description

This invention relates to a machine according to the preamble of claim 1, for working workpieces made of wood and the like, provided with a security system for detecting the presence of the operator.

The invention also relates to an operation method according to the preamble of claim 8, of machine.

More in detail, the invention relates to a machine according to the preamble of claim 1, for working workpieces made of wood, plastic, metal, fibreglass, glass and the like, comprising a motor-driven working plane, provided with a security system for detecting the presence of an operator, designed and manufactured in particular for detecting an operator and for the subsequent blocking of the motor-driven working plane or parts of it.

The description below relates to the detection of the presence of the operator and the blocking of the motor-driven working plane or parts of it, but it is quite apparent how the same should not be considered limited to this specific use.

As is well known, some machines for working workpieces made of wood or the like mainly comprise a base to which is coupled a working plane, for fixing workpieces to be worked, which extends according to a main direction X and a movable working head, provided with a protection which is also movable, which translates along said working plane in one direction and in an opposite direction, thus achieving the known so-called "pendulum-type" working.

The expression "machine for pendulum-type working" means a machine which has two zones, each designed to operate alternately both as a station for loading workpieces and as a station for working workpieces, alternating this functionality on the basis of predetermined control logics.

In this type of machine, said working head translates between said two loading and working zones, in such a way that, whilst the working head occupies the first, for example, the working zone, the second zone acts as loading station and it is free to be loaded with wooden elements to be worked.

Upon completion of said working, the working head moves on said second loading zone which starts to operate as working station and the previous working zone operates as loading station.

The working plane of said machines normally comprises a plurality of transversal members, movable with respect to the base, on which are supported the workpieces to be worked which are fixed by means of fixing elements, such as clamps or suction pads.

Said machines are equipped with main security systems for protecting the operator from impacts or collisions against the movable protection of the operating head.

These systems cause the block of the overall operation of the machines in order not to cause injury to the operators.

However, security system are not known which are complementary and compatible with the main ones which have the function of blocking the elements of the motor-driven working plane, to avoid the trapping of the operator between the movable transversal members of the motor-driven working plane.

The relevant prior art includes also the documents EP 2628993 A1, which discloses a machine according to the preamble of claim 1 and a method according to the preamble of claim 8, and DE 102015226299 A1.

In light of the above, the aim of the invention is therefore to provide a machine for working wooden workpieces and the like, provided with a security system for detecting the presence of an operator and for blocking the working plane or parts of it, without necessarily blocking the operation of the entire machine.

The invention provides a machine according to claim 1, for working workpieces made of wood, plastic, metal, fibreglass and the like comprising a working plane for fixing said workpieces to be worked, comprising a plurality of movable elements, a movable working head which translates along said working plane in one direction and in the opposite direction, at least one detection system designed to detect the presence of an operator in predetermined detection zones contiguous with said working plane and for emitting corresponding signals, a logic control unit, for the operation of said machine, which can be connected to said at least one detection system designed to receive said corresponding signals emitted by said at least one detection system, wherein said logic control unit processes said corresponding signals emitted by said at least one detection system according to a predetermined logic and blocks the movement of the movable elements of said plurality of movable elements corresponding to the zone in which the presence of said operator is detected.

Preferably, according to the invention, said machine can comprise a base for supporting said working plane, and said detection system can comprise a first sensor and a second sensor positioned close to said base or coupled to said base for detecting the presence of said operator in said predetermined detection zone.

Preferably, according to the invention, said movable working head comprises an element for covering the work tools, and said detection system comprises a third sensor and a fourth sensor positioned coupled with said covering element for detecting the presence of said operator in said predetermined detection zone.

Further, according to an embodiment of the invention, said predetermined detection zone is scanned in telescopic portions corresponding to the position occupied by said working head during the translation with respect to said working plane.

Preferably, according to the invention, said movable working head comprises an element for covering the work tools, and said detection system comprises a first sensor and a second sensor positioned coupled to said covering element for detecting the presence of said operator in said predetermined detection zone, and a third sensor and a fourth sensor positioned coupled with said covering element for detecting the presence of said operator in said predetermined detection zone.

Again according to an embodiment of the invention, said predetermined detection zone is scanned in telescopic portions corresponding to the position occupied by said working head during the translation with respect to said working plane.

Preferably, according to the invention, said detection system comprises laser scanner type sensors.

The invention further provides a method according to claim 8, for operating a machine for working workpieces made of wood, plastic, metal, fibreglass and the like of the type comprising a working plane for fixing said workpieces to be worked, comprising a plurality of movable elements, a working head movable along said working plane in one direction and in the opposite direction, a detection system designed to detect the presence of an operator, a logic control unit for the operation of said machine, said method comprising the following steps:
predetermining detection zones contiguous to said working plane,
detecting the presence of the operator in said detection zones by means of the detection system,
sending signals corresponding to the detection of the operator to said logic control unit,
processing said signals according to a predetermined logic to determine the presence of the operator in said detection zones,
if the operator is present, blocking the movement of the movable elements of said plurality movable elements present in present in said detection zone in which the operator is present.

The invention is now described, by way of example and without limiting the scope of the invention, with reference to the accompanying drawings which illustrate preferred embodiments of it, in which:
Figure 1 is a top plan view of the machine for working workpieces, made of wood and similar, provided with a security system for detecting the presence of an operator, according to an embodiment of the invention;
Figure 2 is a top plan view of a second embodiment of the machine according to the invention;
Figure 3 is a top plan view of a third embodiment of the machine according to the invention; and
Figure 4 is a further top view of the machine of Figure 3.

In the various figures similar parts are labelled with the same reference numerals.

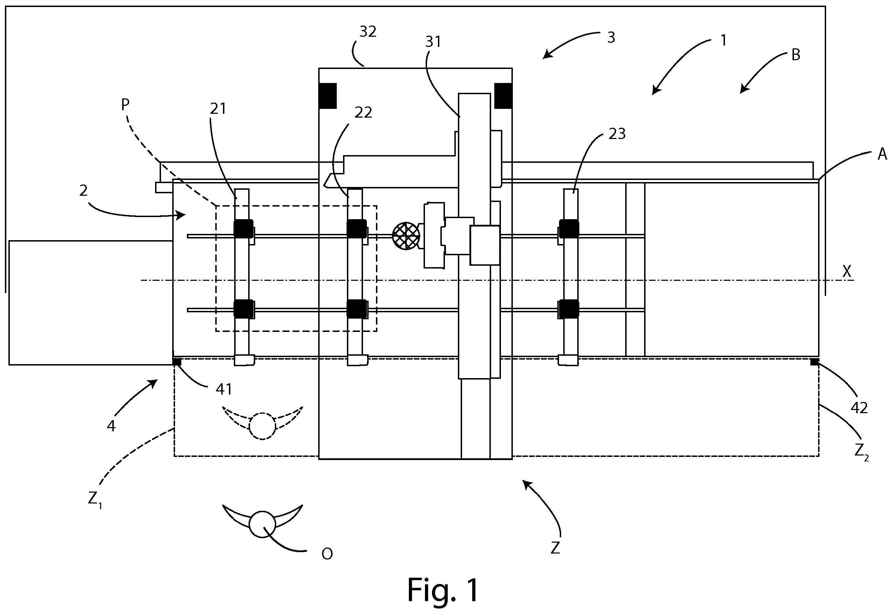

With reference to Figure 1, said machine 1 for working workpieces made of wood, plastic, metal, fibreglass, glass and the like, provided with a security system for detecting the presence of an operator according to an embodiment of the invention basically comprises a base A which supports a motor-driven working plane 2 for supporting said workpieces P to be worked, a movable working head 3 which translates along said working plane 2 in one direction and in the opposite direction, thereby carrying out the known so-called "pendulum" working, a logic control unit, not shown in the drawings, for operation of said machine 1, and a detection system 4, which can be connected to said logic control unit.

Said working plane 2 has an elongate shape, according to a main dimension which extends along an axis X, and comprises a plurality of transversal movable elements 21, 22, 23, ... on which is rested and then fixed the workpiece P to be worked.

Said working head 3 comprises the structure 31 for supporting operator units on which are engaged the tools designed for working the workpiece P and a covering member 32 for the protection of the operator units.

Said working head 3 translates above said working plane 2 according to the direction of said axis X, in one direction and in the opposite direction, performing pendulum-type working.

A front access zone Z to the machine 1 by an operator O is defined as an ideal zone contiguous to said base A in which the operator O enters to perform the operations for loading the workpiece P to be worked and unloading the workpiece P worked.

A rear access zone B to the machine 1 is defined as an ideal zone contiguous to said base A, opposite to said access zone Z, with respect to said access X.

Said front access zone Z and rear access zone B are also defined as zones in which said detection system 4 operates.

Said detection system 4 can comprise one or more sensors of the laser scanner type, known also as wave distance meters, having different features and functionalities.

In a first embodiment of the machine 1, said detection system 4 comprises a first 41 and a second 42 sensor of the laser scanner type coupled with said base A of said machine 1, or substantially fixed in a zone outside said base A and contiguous with it, such as, for example, also the ground on which said base A is rested.

More specifically, said first sensor 41 is coupled to an end of said base A, or substantially fixed in an outer zone, for detecting the presence of the operator O in a first zone Z₁ contiguous with the portion of said base A to which is coupled said first sensor 41.

Whilst, said first sensor 42 is coupled to the end opposite to said base A, with respect to which said first sensor 41 is coupled, or substantially fixed in an outer zone, for detecting the presence of the operator O in a second zone Z₂ contiguous with the portion of said base A to which is coupled said second sensor 42.

Said first Z₁ and second Z₂ zones are each half of said front access zone Z, or detection zone, contiguous with said working plane 2 of said machine 1.

Said first Z₁ and second Z₂ zones are defined as static detection zones, belonging, respectively, to said first 41 and second 42 sensors, since the shape and position of said first Z₁ and second Z₂ zones with respect to said base A are fixed and predetermined during the entire operation of the machine 1.

More specifically, said first 41 and second 42 sensors each emit a laser beam of predetermined wavelength necessary to cover, respectively, said first Z₁ and second Z₂ zones, for detecting in particular the presence of the operator O if present, receiving the beam reflected by the operator O and each providing a corresponding digital signal at the output.

These digital signals are then sent to said logic control unit which blocks the operation of said transversal movable elements 21, 22, 23, ... of said working plane 2 on the basis of a predefined programming.

More specifically, when said working head 3 performs a work on said panel P in said first zone Z₁, the operator O accesses said second zone Z₂ for unloading the workpieces P already worked previously, so it is necessary that said transversal movable elements 21, 22, 23, ... of said working plane 2 in said second zone Z₂ are stationary, in such a way as to allow the operator O to work safely.

For this reason, said sensor 42 detects the presence of the operator O in said second zone Z₂ and sends the corresponding digital signals to said logic control unit which prevents the movement of the transversal members of said working zone 2 in said second zone Z₂.

Vice versa, when said working head 3 performs a work on said panel P in said second zone Z₂, the operator O accesses said first zone Z₁ for unloading the workpieces P already worked previously, so it is necessary that the transversal movable elements of said working plane 2 in said first zone Z₁ are stationary, in such a way as to allow the operator O to work safely.

For this reason, the first sensor 41 detects the presence of the operator O in said first zone Z₁ and sends the corresponding digital signals to said logic control unit which prevents the movement of the transversal members 21, 22, 23, ... of said working zone 2 in said first zone Z₁.

Said first 41 and second 42 sensor can always be active in detection mode or can operate alternately, on the basis of the enabling or disabling by said logic control unit.

More specifically, as described previously, if said working head 3 is occupying said second zone Z₂, said second sensor 42 can be disabled or, even if active, the digital signals sent to the logic control can be ignored, since it is not necessary to detect the presence of the operator O in said second zone Z₂, since his/her safety close to said working head 3 is guaranteed by the main security system of the machine 1, whilst said first sensor 41 is enabled for detecting the presence of the operator O in said first zone Z₁ and vice versa.

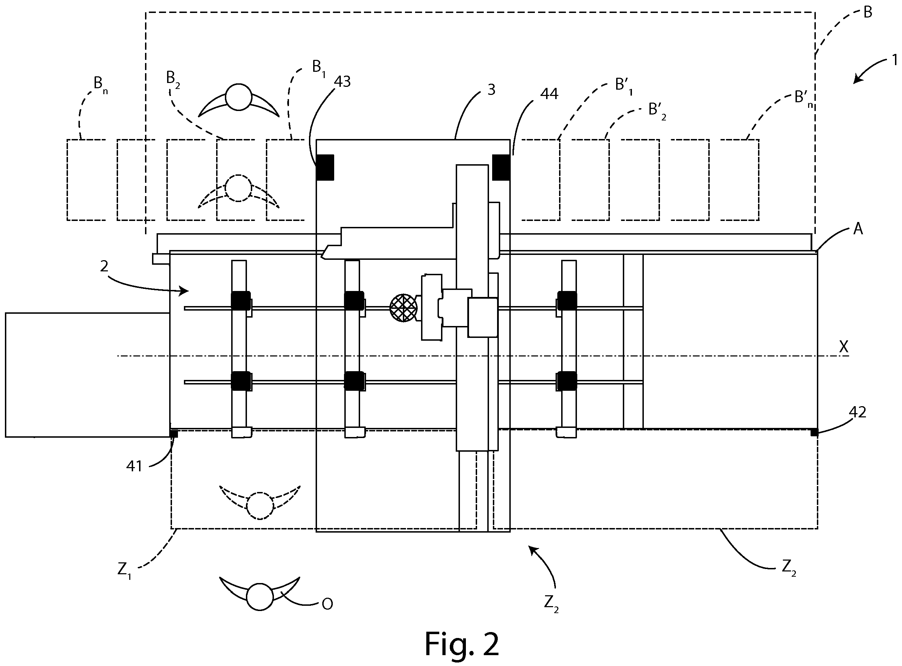

With reference to Figure 2, in a second embodiment of the machine 1, said detection system 4 comprises a third sensor 43 and a fourth sensor 44 coupled with said covering element 32 of said working head 3, which can be used in addition to or instead of both said first 41 and second 42 sensors, for detecting the presence of the operator O in said rear access zone B.

In this embodiment, said rear access zone B is defined as a dynamic zone since the detection by said detection system 4 is performed on portions B₁, B2, B3, ..., Bn e B'1, B'2, B'3, ..., B'n of said rear access zone B, which is variable on the basis of the movement of said working head 3 with respect to said working plane 2 according to said access X, as described in more detail below.

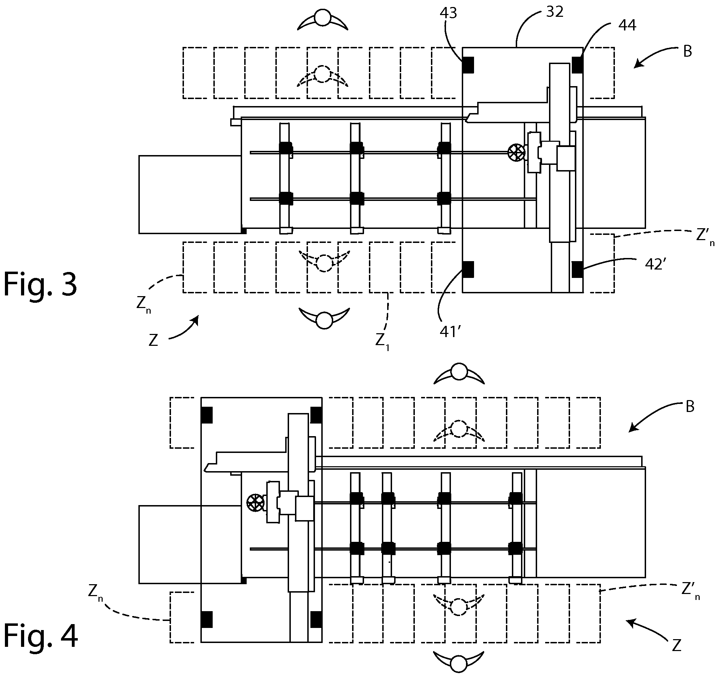

With reference to Figures 3 and 4, in a third embodiment of the machine 1, said detection system 4 comprises a first sensor 41' and a second sensor 42' coupled with said covering element 32 at said front access zone Z, and a third sensor 43 and a fourth sensor 44 installed and operating as described in the second embodiment of the machine 1.

In this third embodiment of said machine 1, both said front access zone Z and said rear access zone B are dynamic detection areas.

It is also possible to provide alternative combinations of said sensors, without however departing from the scope of the invention.

The operation of the machine 1 described above is as follows.

In the first embodiment of the machine 1, as described above, if the working head 3 is performing a working programme occupying said second zone Z₂, said second sensor 42 and the programming associated with it can be deactivated and said second zone Z₂ is therefore not controlled, so said transversal movable elements 21, 22, 23, ... of said working plane 2 can move in accordance with the working programme for the workpiece P.

The security of the operator O is guaranteed by the known main security systems with which said machine 1 is equipped.

At the same time, said first sensor 41 and the programming associated with it are active to detect the presence of the operator O in said first zone Z₁.

If the presence of the operator O is detected in said first zone Z₁, said first sensor 41 sends the digital signals corresponding to said logic control unit which interrupts the movement of said movable transversal members of the working plane 2 in the part contiguous with said first zone Z₁, until the operator O moves away from said first zone Z₁.

The opposite occurs when the working head 3 occupies the working plane 2 in said first zone Z₁.

In the second embodiment of said machine 1, as well as the detection carried out by said first 41 and said second 42 sensor, the detection is carried out by said third 43 and fourth 44 sensors.

Said rear access zone B is divided ideally into zones B₁, B₂, B₃, ..., Bₙ e B'₁, B'₂, B'₃, ..., B'ₙ, where, in sequence, the least extensive zones are always contained in an increasing manner in the most extensive zones, on the basis of the movement of said working head 3 along said working plane 2.

More specifically, when said machine 1 performs a working programme occupying said second zone Z₂, with the variation of the position of the working head 3, the detection in the zones B'1, B'₂, B'₃, ..., B'ₙ controlled by said fourth sensor 44 is progressively disabled, as said working head 3 moves towards the end of said working plane 2 which occupies said working zone Z₂.

At the same time, the detection in the zones B₁, B₂, B₃, ..., Bₙ controlled by said third sensor 43 is, on the other hand, progressively enabled so as to cover the control of the rear access zone B which is uncovered and therefore accessible to the operator O, as said working head moves, thus substantially achieving a detection with telescopic type coverage.

If the presence of the operator O is detected in the zones detected by said third sensor 43, said transversal movable elements of said working plane 2 are blocked until the operator O leaves the zone controlled by said third sensor 43.

The operation of the third embodiment occurs, both for the front access zone Z and for the rear access zone B, as described in the second embodiment.

As is apparent from the above description, the machine according to the invention provided with the detection system described above allows the movement of the elements of the working plane to be safely blocked and reduces the residual risk of trapping of the operator O between the movable elements of the working plane.

Moreover, said detection system is compatible with the pendulum-type working of the machine 1, allows the intermediate movement of the movable elements of the working plane in such a way as to safely move the movable elements of the zone of the machine not affected by the working and on which it is planned to load and fix the workpieces in the subsequent pendulum-type working step.

This invention is described by way of example only, without limiting the scope of application, according to its preferred embodiments, but it shall be understood that the invention may be modified and/or adapted by experts in the field without thereby departing from the scope of the invention as defined in the claims herein.

## Claims

1. Machine (1) for working workpieces (P) made of wood, plastic, metal, glass-fiber and the like comprising
a working plane (2) for fixing said workpieces (P) to be worked, comprising a plurality of movable elements (21, 22, 23, ...),
a movable working head (3), which is configured to translate along said working plane (2) in one direction and in the opposite one,
at least one detection system (4) for detecting the presence of an operator (O) in predetermined detection zones (Z, B) contiguous to said working plane (2) and for emitting corresponding signals,
a main security system in order to guarantee the security of the operator (O) close to said working head (3),
a logic control unit, for the operation of said machine (1), connectable to said at least one detection system (4) capable for receiving said corresponding signals emitted by said at least one detection system (4), said machine (1) being **characterized in that** said logic control unit processes said corresponding signals emitted by said at least one detection system (4) according to a predetermined logic and said logic control unit blocks the movement of the movable elements of said plurality of movable elements (21, 22, 23, ...) corresponding to the predetermined detection zones (Z, B) wherein the presence of said operator (O) is detected.

2. Machine (1) according to the preceding claim, **characterized**
**in that** it comprises a base (A) for supporting said working plane (2), and
**in that** said detection system (4) comprises a first sensor (41) and a second sensor (42) arranged near said base (A) or coupled to said base (A) for detecting the presence of said operator (O) in said predetermined detection zone (Z).

3. Machine (1) according to the preceding claim, **characterized**
**in that** said movable working head (3) comprises a covering member (32) of the working tools, and
**in that** said detection system (4) comprises a third sensor (43) and a fourth sensor (44) arranged coupled to said covering member (32) for detecting the presence of said operator (O) in said predetermined detection zone (B).

4. Machine (1) according to the preceding claim, **characterized in that** the machine is configured such that said predetermined detection zone (B) is detected by a telescopic portions (B'₁, B'₂, B'₃, ..., B'ₙ - B₁, B₂, B₃, ..., Bₙ) detection corresponding to the position occupied by said working head (3) during the translation with respect to said working plane (2).

5. Machine (1) according to claim 1, **characterized in that** said movable working head (3) comprises a covering member (32) of the working tools, and
**in that** said detection system (4) comprises a first sensor (41') and a second sensor (42') arranged coupled to said covering element (32) for detecting the presence of said operator (O) in said predetermined detection zone (Z), and a third sensor (43) and a fourth sensor (44) arranged coupled to said covering member (32) for detecting the presence of said operator (O) in said predetermined detection zone (B).

6. Machine (1) according to the preceding claim, **characterized in that** the machine is configured such that said predetermined detection zone (Z, B) is detected by a telescopic portions (B'₁, B'₂, B'₃, ..., B'n - B₁, B₂, B₃, ..., Bₙ; Z'₁, Z'₂, Z'₃, ..., Z'n - Z₁, Z₂, Z₃, ..., Zₙ) detection corresponding to the position occupied by said working head (3) during the translation with respect to said working plane (2).

7. Machine (1) according to any one of the preceding claims, **characterized in that** said detection system (4) comprises *laser scanner* type sensors.

8. Operation method of a machine (1) for working workpieces (P) made of wood, plastic, metal, glass-fiber and the like, comprising a working plane (2) for fixing said workpieces (P) to be worked, comprising a plurality of movable elements (21, 22, 23, ...), a movable working head (3), which is configured to translate along said working plane (2) in one direction and in the opposite one, a detecting system (4) capable for detecting the presence of an operator (O),comprising a main security system in order to guarantee the security of the operator (O) close to said working head (3), a logic control unit for the operation of said machine (1),
wherein said method is **characterized by** comprising the following steps:
predetermining detection zones (Z, B) contiguous to said working plane (2),
detecting the presence of the operator (O) in said detection zones (Z, B) by means of the detection system (4),
sending signals corresponding to the detection of the operator (O) to said logic control unit,
processing said signals according to a predetermined logic to determine the presence of the operator in said detection zones (Z, B), and
if the presence of the operator (O) is detected, blocking the movement of the mobile elements of said plurality of movable elements (21, 22, 23, ...) which are in said detection zone wherein the operator (O) is present.

## Patentansprüche

1. Maschine (1) für die Bearbeitung von Werkstücken (P) aus Holz, Kunststoff, Metall, Glasfaser und dergleichen, umfassend
eine Arbeitsfläche (2) zur Fixierung besagter zu bearbeitender Werkstücke (P), umfassend eine Vielzahl beweglicher Elemente (21, 22, 23, ...),
einen beweglichen Arbeitskopf (3), der konfiguriert ist, um sich in einer Richtung und in der Gegenrichtung entlang besagter Arbeitsfläche (2) zu bewegen,
mindestens ein Erkennungssystem (4) zur Erkennung des Vorhandenseins eines Bedieners (O) in vorbestimmten Erkennungsbereichen (Z, B), die an besagte Arbeitsfläche (2) angrenzen, und zum Senden entsprechender Signale,
ein Hauptsicherheitssystem, um die Sicherheit des Bedieners (O) in der Nähe besagten Arbeitskopfes (3) zu gewährleisten,
eine Logiksteuereinheit für den Betrieb besagter Maschine (1), die mit besagtem mindestens einen Erkennungssystem (4) verbunden werden kann und in der Lage ist, besagte entsprechende Signale zu empfangen, die von besagtem mindestens einen Erkennungssystem (4) gesendet werden, wobei besagte Maschine (1) **dadurch gekennzeichnet ist, dass** besagte Logistiksteuereinheit besagte entsprechende Signale verarbeitet, die von besagtem mindestens einen Erkennungssystem (4) gesendet werden, gemäß einer vorgegebenen Logik und wobei besagte Logistiksteuereinheit die Bewegung der beweglichen Elemente besagter Vielzahl beweglicher Elemente (21, 22, 23, ...) entsprechend den vorbestimmten Erkennungsbereichen (Z, B) blockiert, in denen das Vorhandensein besagten Bedieners (O) erkannt wird.

2. Maschine (1) nach dem vorhergehenden Anspruch, **gekennzeichnet dadurch, dass**
sie eine Unterlage (A) umfasst zum Stützen besagter Arbeitsfläche (2),
und
dass besagtes Erkennungssystem (4) einen ersten Sensor (41) und einen zweiten Sensor (42) umfasst, die in der Nähe besagter Unterlage (A) angeordnet sind zum Erkennen des Vorhandenseins besagten Bedieners (O) in besagtem vorbestimmtem Erkennungsbereich (Z).

3. Maschine (1) nach dem vorhergehenden Anspruch, **gekennzeichnet dadurch, dass**
besagter beweglicher Arbeitskopf (3) ein Abdeckglied (32) der Arbeitsgeräte umfasst und
dass besagtes Erkennungssystem (4) einen dritten Sensor (43) und einen vierten Sensor (44) umfasst, die gekoppelt an besagtes Abdeckglied (32) angeordnet sind, um das Vorhandensein besagten Bedieners (O) in besagtem vorbestimmten Erkennungsbereich (B) zu erkennen.

4. Maschine (1) nach dem vorhergehenden Anspruch, **dadurch gekennzeichnet, dass** die Maschine so konfiguriert ist, dass besagter Erkennungsbereich (B) durch Teleskopabschnitte (B'1, B'2, B'3, ..., B'n- B1, B2, B3, ..., Bn) erkannt wird, wobei die Erkennung der Position entspricht, die von besagtem Arbeitskopf (3) während der Bewegung in Bezug auf besagte Arbeitsfläche (2) belegt wird.

5. Maschine (1) nach Anspruch 1, **dadurch gekennzeichnet, dass** besagter beweglicher Arbeitskopf (3) ein Abdeckglied (32) der Arbeitsgeräte umfasst und
dass besagtes Erkennungssystem (4) einen ersten Sensor (41') und einen zweiten Sensor (42') umfasst, die mit besagtem Abdeckelement (32) gekoppelt angeordnet sind, um das Vorhandensein besagten Bedieners (O) in besagtem vorbestimmtem Erkennungsbereich (Z) zu erkennen, und einen dritten Sensor (43) und einen vierten Sensor (44), die gekoppelt mit besagtem Abdeckglied (32) angeordnet sind zum Erkennen des Vorhandenseins besagten Bedieners (O) in besagtem vorbestimmtem Erkennungsbereich (B).

6. Maschine (1) nach dem vorhergehenden Anspruch, **dadurch gekennzeichnet, dass** die Maschine so konfiguriert ist, dass der vorbestimmte Erkennungsbereich (Z, B) durch Teleskopabschnitte (B'1, B'2, B'3, ..., B'n- B1, B2, B3, ..., Bn; Z'1, Z'2, Z'3, ..., Z'n- Z1, Z2, Z3, ..., Zn) erkannt wird, wobei die Erkennung der Position entspricht, die von besagtem Arbeitskopf (3) während der Bewegung in Bezug auf besagte Arbeitsfläche (2) belegt wird.

7. Maschine (1) nach einem beliebigen der vorhergehenden Ansprüche, **dadurch gekennzeichnet, dass** besagtes Erkennungssystem (4) Sensoren vom Typ Laserscanner umfasst.

8. Arbeitsverfahren einer Maschine (1) für die Bearbeitung von Werkstücken (P) aus Holz, Kunststoff, Metall, Glasfaser und dergleichen, umfassend eine Arbeitsfläche (2) zur Fixierung besagter zu bearbeitender Werkstücke (P), umfassend eine Vielzahl beweglicher Elemente (21, 22, 23, ...), einem beweglichen Arbeitskopf (3), der so konfiguriert ist, dass er sich entlang besagter Arbeitsfläche (2) in einer Richtung und in der Gegenrichtung bewegen kann, ein Erkennungssystem (4), das in der Lage ist, das Vorhandensein eines Bedieners (O) zu erkennen, umfassend ein Hauptsicherheitssystem, um die Sicherheit des Bedieners (O) in der Nähe besagten Arbeitskopfes (3) zu gewährleisten, eine Logiksteuereinheit für den Betrieb besagter Maschine (1), wobei besagtes Verfahren gekennzeichnet ist, dass es die folgenden Schritte umfasst:
die Vorbestimmung der Erkennungsbereiche (Z, B), die an besagte Arbeitsfläche (2) angrenzen,
die Erkennung des Vorhandenseins des Bedieners (O) in besagten Erkennungsbereichen (Z, B) mittels des Erkennungssystems (4),
das Senden von Signalen, die der Erkennung des Bedieners (O) entsprechen, an besagte Logiksteuereinheit,
die Verarbeitung besagter Signale gemäß einer vorbestimmten Logik zur Bestimmung des Vorhandenseins des Bedieners in besagten Erkennungsbereichen (Z, B) und, wenn das Vorhandensein des Bedieners (O) erkannt wird, blockieren der Bewegung der beweglichen Elemente besagter Vielzahl beweglicher Elemente (21, 22, 23, ...), die sich in besagtem Erkennungsbereich befinden, in dem sich der Bediener (O) aufhält.

## Revendications

1. Machine (1) pour usiner les pièces à travailler (P) en bois, plastique, métal, fibre de verre et autres éléments similaires, comprenant
un plan de travail (2) pour fixer lesdites pièces (P) à travailler, comprenant une pluralité d'éléments mobiles (21, 22, 23, ...),
une tête de travail mobile (3), qui est configurée pour effectuer une translation le long dudit plan de travail (2) dans un sens et dans le sens opposé,
au moins un système de détection (4) permettant de détecter la présence d'un opérateur (O) dans des zones de détection prédéterminées (Z, B) contiguës audit plan de travail (2) et pour émettre les signaux correspondants,
un système de sécurité principal afin de garantir la sécurité de l'opérateur (O) près de ladite tête de travail (3),
une unité de commande logique, pour le fonctionnement de ladite machine (1), pouvant être connectée audit au moins un système de détection (4) capable de recevoir lesdits signaux correspondants émis par ledit au moins un système de détection (4), ladite machine (1) étant **caractérisée en ce que** ladite unité de commande logique traite les signaux correspondants émis par ledit au moins un système de détection (4) selon une logique prédéterminée et ladite unité de commande logique bloque le mouvement des éléments mobiles de ladite pluralité d'éléments mobiles (21, 22, 23, ...) correspondant aux zones de détection prédéterminées (Z, B), dans laquelle la présence dudit opérateur (O) est détectée.

2. Machine (1) selon la revendication précédente, **caractérisée**
**en ce qu'**elle comprend une base (A) pour soutenir ledit plan de travail (2),
et
**en ce que** ledit système de détection (4) comprend un premier capteur (41) et un deuxième capteur (42) disposés à proximité de ladite base (A) ou couplés à ladite base (A) pour détecter la présence dudit opérateur (O) dans ladite zone de détection prédéterminée (Z).

3. Machine (1) selon la revendication précédente, **caractérisée**
**en ce que** ladite tête de travail mobile (3) comprend un élément de couverture (32) des outils de travail, et
**en ce que** ledit système de détection (4) comprend un troisième capteur (43) et un quatrième capteur (44) disposés couplés audit élément de couverture (32) pour détecter la présence dudit opérateur (O) dans ladite zone de détection prédéterminée (B).

4. Machine (1) selon la revendication précédente, **caractérisée en ce que** la machine est configurée de telle sorte que ladite zone de détection prédéterminée (B) est détectée par une détection par portions télescopiques (B'1, B'2, B'3, ..., B'n-B1, B2, B3, ..., Bn) correspondant à la position occupée par ladite tête de travail (3) pendant la translation par rapport audit plan de travail (2).

5. Machine (1) selon la revendication 1, **caractérisée en ce que** ladite tête de travail mobile (3) comprend un élément de couverture (32) des outils de travail, et
**en ce que** ledit système de détection (4) comprend un premier capteur (41') et un deuxième capteur (42') disposés couplés audit élément de couverture (32) pour détecter la présence dudit opérateur (O) dans ladite zone de détection prédéterminée (Z), et un troisième capteur (43) et un quatrième capteur (44) disposés couplés audit élément de couverture (32) pour détecter la présence dudit opérateur (O) dans ladite zone de détection prédéterminée (B).

6. Machine (1) selon la revendication précédente, **caractérisée en ce que** la machine est configurée de telle sorte que ladite zone de détection prédéterminée (Z, B) est détectée par une détection par portions télescopiques (B'1, B'2, B'3, ..., B'n- B1, B2, B3, ..., Bn ; Z'1, Z'2, Z'3, ..., Z'n-Z1, Z2, Z3, ..., Zn) correspondant à la position occupée par ladite tête de travail (3) pendant la translation par rapport audit plan de travail (2).

7. Machine (1) selon l'une des revendications précédentes, **caractérisée en ce que** ledit système de détection (4) comprend des capteurs de type scanner laser.

8. Procédé de fonctionnement d'une machine (1) pour travailler des pièces à travailler (P) en bois, plastique, métal, fibre de verre et similaires, comprenant un plan de travail (2) pour fixer lesdites pièces (P) à travailler comprenant une pluralité d'éléments mobiles (21, 22, 23, ...), une tête de travail mobile (3), qui est configurée pour effectuer une translation le long dudit plan de travail (2) dans un sens et dans le sens opposé, un système de détection (4) capable de détecter la présence d'un opérateur (O), comprenant un système de sécurité principal afin de garantir la sécurité de l'opérateur (O) près de ladite tête de travail (3), une unité de commande logique pour le fonctionnement de ladite machine (1), dans lequel ledit procédé est **caractérisé par** les étapes suivantes :
la prédétermination des zones de détection (Z, B) contiguës audit plan de travail (2),
la détection de la présence de l'opérateur (O) dans lesdites zones de détection (Z, B) au moyen du système de détection (4),
l'envoi de signaux correspondant à la détection de l'opérateur (O) à ladite unité de commande logique,
le traitement de ces signaux selon une logique prédéterminée pour déterminer la présence de l'opérateur dans lesdites zones de détection (Z, B), et si la présence de l'opérateur (O) est détectée, le blocage du mouvement des éléments mobiles de ladite pluralité d'éléments mobiles (21, 22, 23, ...) qui se trouvent dans ladite zone de détection dans laquelle l'opérateur (O) est présent.
